# EUROPEAN PATENT APPLICATION

(11) **EP 0 964 339 A2**
(43) Date of publication of application: **15.12.1999**
(21) Application number: 99110984.4
(22) Date of filing: 09.06.1999
(51) Int. Cl.: G06F 17/22

(54) **Computer system for printing a HTML document**

(30) Priority: 09.06.1998 JP 16032698
(71) Applicant: NEC CORPORATION, Tokyo (JP)
(72) Inventor: Chihara, Tatsuya, Minato-ku, Tokyo (JP)
(74) Representative: Baronetzky, Klaus, Dipl.-Ing.

(57) **Abstract**

A printer (17) has a document receiving section (12, 13) for receiving a HTML document (42) from a server computer (20) based on a URL of the HTML document (42) specified by a client computer (18). The document receiving section (12, 13) includes a URL register (12) for storing the URL specified by the client computer (18) and a HTML converter (13) for receiving the HTML document (42) based on the URL stored in the URL register (12) and converting the received HTML document (42) including an embedded object with the assistance by a printer assistant server (19) and without the assistance by the client computer (18).

## Description

The present invention relates to a computer system for printing a HTML (Hyper Text Markup Language) document and, more particularly, to a computer system including a printing device which is capable of saving processing time and burden for a client computer.

### (b) Description of the Related Art

Printing systems having a function for printing a HT document, such as a HTML document, are increasingly used in computer systems. In such a printing device, when a plurality of HT documents co-related with one another by a plurality of layers of hyperlinks are to be printed, the object HT documents are first displayed on a window of a display unit of the client computer and subjected to printing by using a printing command one by one.

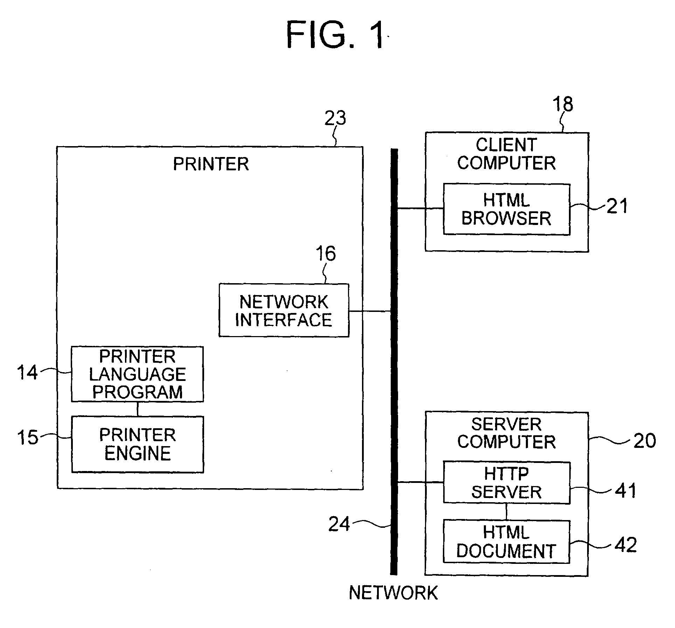

Referring to Fig. 1, a conventional printing device includes a plurality of client computers including a client computer 18, a server computer 20 for storing therein a HTML document 42 to be printed, and a printer 23 for printing the HTML document specified by the client computer 18, all of which are coupled by a network 24 to one another for data transmission.

The server computer 20 includes a HTTP (Hyper Text Transport Protocol) server 41 and stores the HTML document 42. The term "HTTP" means a transport protocol generally used for accessing to a web site. The client computer 18 includes a HTML browser 21 for accessing a web site home page. The printer 23 includes a network interface 16 for coupling the printer 23 with the network 24, a printer language program 14 for interpreting a document according to a printer language to generate printer language data, and a printer engine 15 for printing the document based on the printer language data supplied from the printer language program 14.

In the conventional printing device as described above, the client computer 18 specifies URL of a desired HTML document 42 on the internet by using the HTML browser 21 to display the HTML document 42 on the own display unit. The client computer 18 then selects a print command in the HTML browser 21, specifies the printer 23 out of a plurality of printers, converts the HTML document 42 into the printer language data by using a printer driver incorporated in the operating system of the client computer 18, and transfers the converted HTML document to the printer 23.

When the client computer 18 operates for processing of printing the HTML document 42, it imposes a burden on the client computer 18 and consumes a large amount of time. In addition, the printer language depends on the model or maker of the printer and the conversion of the HTML document into the printer language data depends on the operating system of the client computer 18. Thus, the client computer 18 must have a plurality of conversion modules operating on the own operating system and depending on the model or maker of the printer.

### SUMMARY OF THE INVENTION

It is therefore an object of the present invention to provide a computer system having a printing device, which is capable of alleviating the burden of the client computer as well as saving the conversion modules for converting the HTML documents into the printer language data.

The present invention provides a computer system including a server computer for storing a HTML document having a URL thereof, a client computer having a function for designating the URL of the HTML document, and a printing device for printing based on a printer language, which are coupled with one another through a network for data transmission, the printing device including a document receiving section for receiving the HTML document from the server computer based on a URL specified by the client computer.

In accordance with the computer system of the present invention, the burden of the client computer can be alleviated and the processing time of the client computer can be reduced by providing the document receiving section in the printer, which can receive a HTML document specified by the client computer from the server computer without assistance by the client computer.

The above and other objects, features and advantages of the present invention will be more apparent from the following description, referring to the accompanying drawings.

### BRIEF DESCRIPTION OF THE DRAWINGS

Fig. 1 is a block diagram of a conventional computer system having a printer for printing a HTML document.
Fig. 2 is a block diagram of a computer system including a printing device according to a first embodiment of the present invention.
Fig. 3 is a flowchart of the HTML converter shown in Fig. 2.
Fig. 4 is a block diagram of a computer system including a printing device according to a second embodiment of the present invention.
Fig. 5 is a flowchart of a computer system including a printing device according to a second embodiment of the present invention.

### PREFERRED EMBODIMENTS OF THE INVENTION

Now, the present invention is more specifically described with reference to accompanying drawings, wherein similar constituent elements or similar steps are designated by similar reference numerals throughout the drawings.

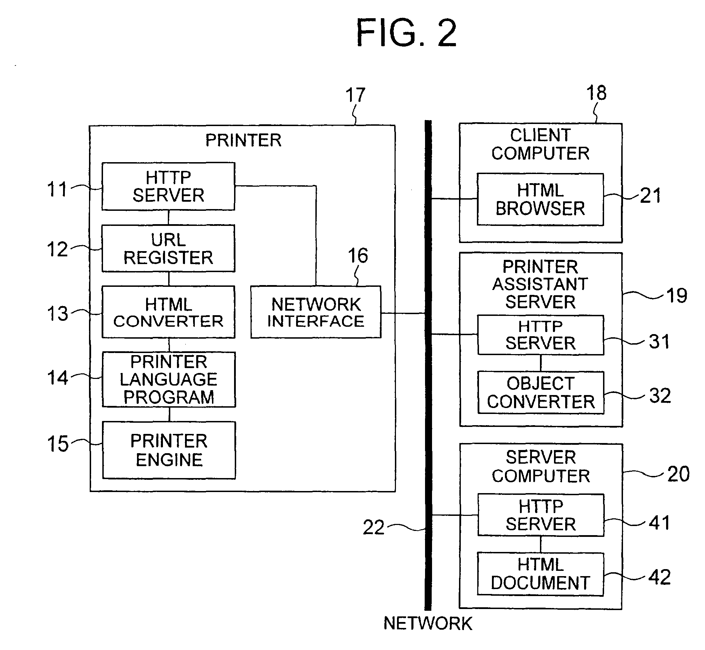

Referring to Fig. 2, a computer system including a printing device according to a first embodiment of the present invention includes a plurality of client computers including a specific client computer 18 depicted in the drawing, a plurality of printers including a specific printer 17 having a function for printing a HTML document, a printer assistant server 19 for assisting the function of the printer 17, a server computer 20 for storing a plurality of HTML documents including a specific HTML document 42, all of which are coupled by a network 22.

For example, some of the plurality of client computers including the specific client computer 18, some of the plurality of printers including the specific printer 17, and the single printer assistant server 19 are disposed within a single area such as in a single corporation or building, whereas a plurality of server computers including the server computer 20 are disposed outside the area.

The client computer 18 has a HTML browser 21 for read-out of the HTML document 42 stored in the server computer 20 as a www home page. The printer assistant server 19 includes a HTTP server 31 and an object converter 32 for converting a special object into bitmap data based on which the printer 17 can prints. The server computer 20 includes a HTTP server 41 and stores the HTML document 42 which is to be printed by the printer 23 based on the instruction from the client computer 18.

The printer 17 includes a HTTP server 11, a URL register 12, a HTML converter 13, a printer language program 14, a printer engine 15, and a network interface 16.

The HTTP server 11 communicates with the HTML browser 21 of the client computer 18 through the network interface 16 and the network 22. The URL register 12 receives URL of the HTML document 42, which the client computer 18 specifies for printing, from the HTML browser 21 of the client computer 18 through the HTTP server 11 and the network interface 16.

The HTML converter 13 communicates with the HTTP server 41 of the server computer 20 through the network interface 16 and the network 22 based on the URL stored in the URL register 12, receives the HTML document 42 having the URL stored in the URL register 12 for printing, and converts the same into the printer language data. When the HTML converter 13 finds that the HTML document 42 is attached with an embedded object which the HTML converter 13 cannot convert on its own platform, the HTML converter 13 communicates with the object converter 32 through the HTTP server 31, and requests the object converter 32 to convert the embedded object into bitmap data.

The printer language program 14 further converts the HTML document 42, defined by the printer language and received from the HTML converter 13, into printing data including characters and image data. The printer engine 15 executes the printing of the HTML document 42 based on the image or character data received from the printer language program 14.

The client computer 18 communicates with the printer 17 through the HTTP server 11 by using the HTML browser 21. After the URL register 12 is accessed by the HTML browser 21 through the HTTP server 11, the client computer 18 specifies URL of the HTML documents 42 in the URL register 12. Thus, the HTML converter 13 communicates with the HTTP server 41 of the server computer 20 based on the URL of the HTML document 42 stored in the URL register 12 and receives data of the HTML document 42. The HTML converter 13 converts the character or bitmap data of the HTML document 42 into the printer language data used in the printer 17, and delivers the converted data to the printer language program 14.

In the present embodiment, URL register 12 and the HTML converter 13 constitute a document receiving section for receiving the specified HTML document 42 from the server computer 20 based on the request from the client computer 18.

In operation, the user operates the client computer 18 for starting communication between the client computer 18 and the HTTP server 11 in the printer 17, and accesses a page of "printing by URL designation" of the URL register 12 based on the hyperlink of the HTTP server 11. The URL register 12 thus provides a blank form of "printing by URL designation" in a HTML format through the HTTP server 11 for receiving a request from the client computer 18. The client computer 18 then requests the printer 17 to print the HTML document 42 including embedded objects by designating the URL of the HTML document 42 in the URL register 12.

The URL of the desired HTML document 42 is transmitted through the URL register 12 to the HTML converter 13.

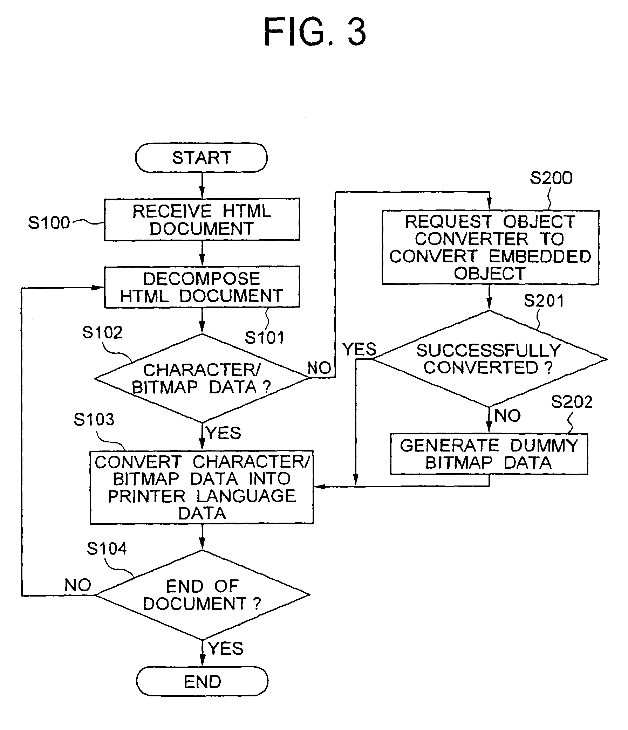

Referring to Fig. 3 showing a flowchart of the operation by the HTML converter 13, the HTML converter 13 receives at step S100 the HTML document 42 having the URL specified by the user from the server computer 20 through the HTTP server 41 and the network 22. The HTML converter 13 then decomposes at step S101 the HTML document 42 into a plurality of species of HTML elements including characters which may include control codes, bitmap data, and embedded objects. At step S102, these species are examined as to whether or not each element is a character or a bitmap data that can be converted on its own platform into the printer language data used in the printer 17.

If it is judged at step S102 that the element is a character or a bitmap data, the HTML converter 13 converts the element into the printer language data at step S103. On the other hand, if it is judged at step S102 that the element is neither a character nor a bitmap data, that is, the element is an embedded object, the HTML converter communicates with the object converter 32 in the printer assistant server 19 at step S200 through the network interface 16 and the network 22, and requests the object converter 32 to convert the embedded object into bitmap data.

If it is judged at step S201 following step S200 that the embedded object was successfully converted into the bitmap data, the process advances to step S103 wherein the embedded object is further converted into the printer language data. If it is judged at step S201 that the embedded object was not converted into bitmap data, the HTML converter 13 generates dummy bitmap data in place of the embedded object data. At step S104, if all the elements in the entire HTML document are not subjected to the above steps, the process returns to step S101 for another remaining element.

After the HTML converter 13 converts all the elements in the entire HTML document 42 into the printer language data with or without dummy data, the printer language program 14 translates the printer language data into the printing data which the printer engine 15 can handle with. Thus, the printer 17 prints the HTML document 42 specified by the client computer 18 without any assistance from the client computer 18. The image for the embedded object which cannot be converted into bitmap data is replaced by dummy data image.

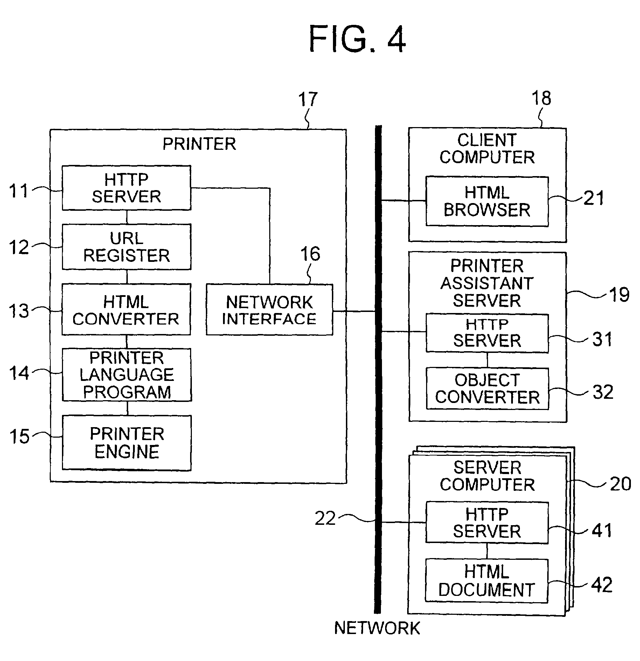

Referring to Fig. 4, a printing device according to a second embodiment of the present invention is similar to the first embodiment except that the HTML document 42 specified by the user designates a plurality of HTML documents co-related with the HTML document 42 by a plurality of layers of hyperlinks therein.

In operation, the URL register 12 receives, through the HTTP server 11 and the network 22, URL of the HTML document 42 specified by the user and a limit of the number of layers of hyperlinks traced from the HTML document 42, within which the user requests the printer 17 to print the documents.

The HTML converter 13 receives the HTML document 42 from the server computer 20 based on the URL of the HTML document 42 and the limit of the number of layers of hyperlinks stored in the URL register 12. The HTML converter 13 then converts the received HTML document 42 into the printer language data element by element. If the HTML converter 13 judges that the HTML document 42 has an embedded object which the HTML converter 13 cannot converts on its own platform, the HTML converter 13 communicates with the object converter 32 through the HTTP server 31 of the printer assistant server 19 and requests the object converter 32 to convert the embedded object. The HTML converter 13 then receives all the URLs of the HTML documents based on the hyperlinks embedded in the HTML document 42, and examines the number of layers of hyperlinks for the HTML documents. If the number of layers of hyperlinks for a HTML document is not higher than the limit specified by the user, the HTML converter 13 recursively converts the HTML document separately from other HTML documents into the printer language data. The printer language program 14 converts the printer language data into the printing data such as image or character data. The printer engine 15 then prints the printing data on a recording sheet.

In operation, the URL register 12 transmits a HTML mail to the HTML browser 21 upon request from the client computer 18. The HTML mail has a blank form for specifying the URL of the HTML document 42 and the limit of the number of layers of the hyperlinks from the original HTML document 42 to be printed by the printer 17. The user specifies the URL of the HTML document 42 and requests the printer 17 to print the HTML document 42 including HTML documents specified by the hyperlinks in the HTML document 42 within the limit of the layers of the hyperlinks specified in the form.

The HTML mail from the client computer 18 is transmitted to the HTML converter 13 through the URL register 12.

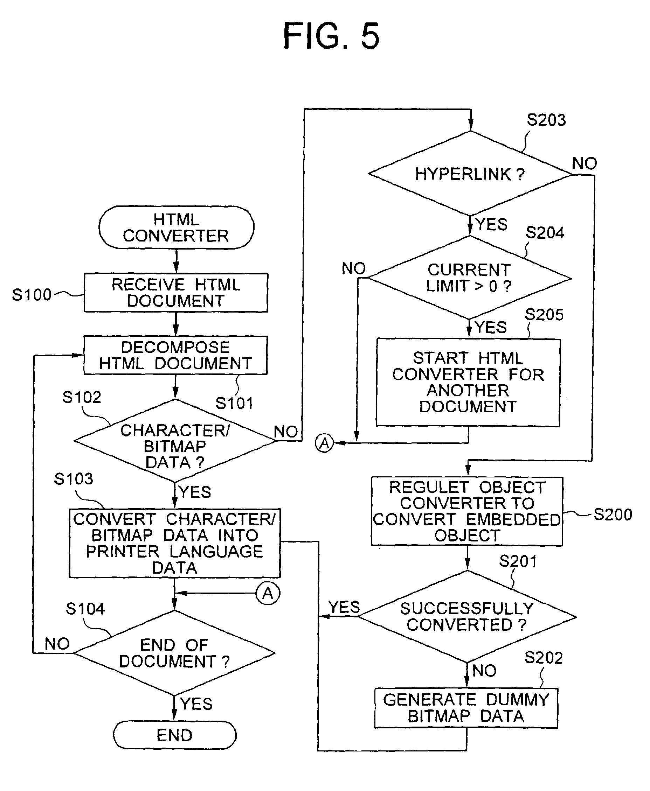

Referring to Fig. 5 showing a flowchart of the operation by the HTML converter 13 in the present embodiment, the HTML converter 13 receives the HTML document 42 having the URL specified by the user at step S100 from the server computer 20 through the HTTP server 41 and the network 22. The HTML converter 13 then decomposes at step S101 the HTML document 42 into a plurality of species of HTML elements including characters which may include control codes, bitmap data and embedded objects.

At step S102, those elements are examined element by element as to whether or not each element is a character or a bitmap data that can be converted on its own platform into the printer language data used in the printer 17. If it is judged at step S102 that the element is a character or a bitmap data, the HTML converter 13 converts the element into the printer language data at step S103. On the other hand, if it is judged at step S102 that the element is neither a character nor a bitmap data, the element is further examined at step S203 whether or not it is a hyperlink. If it is judged at step S203 that the element is a hyperlink, it is judged at step S204 whether the current limit of the number of layers of hyperlinks is above zero.

If it is judged at step S204 that the current limit of the number of layers is above zero, the HTML converter 13 recursively calls itself at step S205 to receive and print another HTML document specified by the hyperlink in the HTML document 42. In this step, the current URL is replaced by the new URL of the another HTML document and the limit of the number of layers of hyperlinks minus one is defined as a new limit. In other words, another window of the HTML converter 13 is started, wherein the current limit of the number of layers of the hyperlinks is a parameter and the URL of the another document specified by the hyperlink is a new URL. After step S205, the process advances to step S104.

On the other hand, if it is judged at step S203 that the element is an embedded object, the process advances to step S200 wherein the HTML converter 13 communicates with the object converter 32 and requests the same to convert the embedded object. If it is judged at step S201 that the embedded object was successfully converted to a bitmap data, the process advances to step S103 wherein the embedded object is further converted into the printer language data. If it is judged at step S201 that the embedded object was not converted into a bitmap data, the HTML converter 13 generates a dummy bitmap data in place of the embedded object data. After the character or bitmap data for the element is converted into the printer language data at step S103, the process advances to step S104 and returns to step S101 if it is judged at step S104 that all the elements are not converted, to thereby iterate all the steps for every element in the HTML documents. Thus, all the elements in the HTML documents specified by the user and by the hyperlinks are converted so long as the number of layers of hyperlinks does not exceed the limit specified by the user.

After it is judged at step S104 that the HTML converter 13 converted all the elements in the entire HTML document 42 into the printer language data with or without dummy data, the printer language program 14 translates the printer language data into the printing data which the printer engine 15 can handle. Thus, the printer 17 prints all the HTML documents specified by the hyperlinks within the limit of the number of layers. The image for the object which cannot be converted to bitmap data is replaced by dummy data image.

In the above embodiment, a single printer assistant server is provided; however, a plurality of printer assistant server may be provided for alleviating the burden of the individual printer assistant server by distribution of the task to the plurality of the printer assistant server.

Since the above embodiments are described only for examples, the present invention is not limited to the above embodiments and various modifications or alterations can be easily made therefrom by those skilled in the art without departing from the scope of the present invention.

## Claims

1. A computer system comprising a server computer (20) for storing a HTML document (42) having a URL thereof, a client computer (18) having a function for designating the URL of said HTML document (42), and a printing device (17) for printing based on a printer language, which are coupled with one another through a network (22) for data transmission, characterized in that said printing device (17) includes a document receiving section (12, 13) for receiving said HTML document (42) from said server computer (20) based on a URL specified by said client computer (18).

2. The computer system as defined in claim 1, wherein said document receiving section (12, 13) comprises a URL register (12) for storing the URL specified by said client computer (18), and a HTML converter (13) for receiving said HTML document (42) from said server computer (20) based on the URL stored in said URL register (12).

3. The computer system as defined in claim 2, wherein said HTML converter (13) has a function for converting said HTML document (42) into data defined by said printer language for printing.

4. The computer system as defined in claim 3, further comprising a printer assistant server (19) coupled at least with said printing device (17), wherein said printer assistant server (19) converts an object embedded in said HTML document (42) into bitmap data.

5. The computer system as defined in claim 1, wherein said document receiving section (12, 13) receives a plurality of other HTML documents specified by hyperlinks embedded in said HTML document (42).

6. The computer system as defined in claim 5, wherein said client computer (18) specifies a limit for a number of layers of hyperlinks for another HTML document traced from said HTML document (42).
